(19) Europäisches Patentamt
European Patent Office
Office européen des brevets

(11) Veröffentlichungsnummer: **0 287 512 A2**

# (12) EUROPÄISCHE PATENTANMELDUNG

(21) Anmeldenummer: **88810225.8**

(51) Int. Cl.[4]: **A 01 N 43/50**

(22) Anmeldetag: **07.04.88**

(30) Priorität: **13.04.87 CH 1440/87**

(43) Veröffentlichungstag der Anmeldung:
**19.10.88 Patentblatt 88/42**

(84) Benannte Vertragsstaaten:
**AT BE CH DE ES FR GB GR IT LI LU NL SE**

(71) Anmelder: **CIBA-GEIGY AG**
**Klybeckstrasse 141**
**CH-4002 Basel (CH)**

**JANSSEN PHARMACEUTICA N.V.**
**Turnhoutsebaan 30**
**B-2340 Beerse (BE)**

(72) Erfinder: **Kerber, Elmar, Dr.**
**Niederwihl 131**
**D-7883 Göhrwil (DE)**

**Van Gestel, Jozef, Dr.**
**Renier Sniederspad 5**
**B-2350 Vosselaar (BE)**

## (54) Pflanzenwuchsregulatoren.

(57) Die Wirkstoffe der Formel I

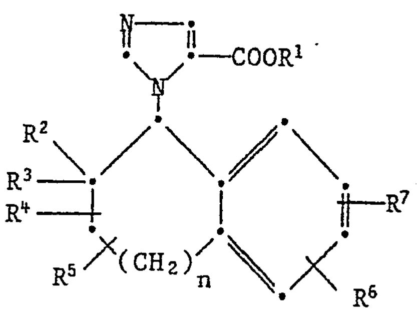

(I),

die Salze oder stereochemischen Isomeren davon beeinflussen Stoffwechsel und Wachstumsvorgänge in Pflanzen und Pflanzenteilen. Sie sind daher als Pflanzenwuchsregulatoren bei einer Vielzahl von kultivierten mono- und dikotylen Pflanzen einsetzbar.

In der Forml I bedeuten
$R^1$ Wasserstoff, $C_1$-$C_5$-Alkyl, $C_3$-$C_4$-Alkenyl, $C_3$-$C_4$-Alkinyl oder $C_2$-$C_4$-Alkoxyalkyl,
$R^2$ und $R^3$ unabhängig voneinander $C_1$-$C_4$-Alkyl, oder $R^2$ und $R^3$ zusammen mit dem sie tragenden Kohlenstoffatom eine Cycloalkylring mit 3 bis 7 Kohlenstoffatomen,
$R^4$ und $R^5$ unabhängig voneinander Wasserstoff oder $C_1$-$C_4$-Alkyl,
$R^6$ uns $R^7$ unabhängig voneinander Wasserstoff, $C_1$-$C_4$-Alkyl $C_1$-$C_4$-Alkoxy, Nitro, $C_1$-$C_4$-Halogenalkyl, $C_1$-$C_4$-Halogenalkoxy oder Halogen, und
n die Zahl null oder eins.

EP 0 287 512 A2

**Beschreibung**

## Pflanzenwuchsregulatoren

Die vorliegende Erfindung betrifft ein neues Verfahren zur Beeinflussung des Pflanzenwachstums durch Verwendung von 2,2-Dialkyl-1-imidazolyl-indan- und 2,2-Dialkyl-1-imidazolyl-tetralin- Verbindungen.

2,2-Dialkyl-1-imidazolyl-indan- und 2,2-Dialkyl-imidazoltetralin-Verbindungen sind aus der publizierten Europäischen Patentanmeldung EP-A-207563 als Herbizide bekannt.

Einzelne 1-Imidazolyl-tetraline sind aus dem US-Patent 3,873,297 als Spross-Knosphen-Inhibitoren bekannt. Im US-Patent 3,485,917 werden gewisse 1-Imidazolyl-tetraline und -indane als pharmazeutisch einsetzbare Fungizide beschrieben.

Die im erfindungsgemässen Verfahren einsetzbaren Wirkstoffe entsprechen Formel I

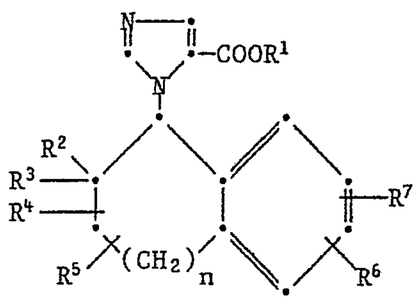

(I)

worin

$R^1$ Wasserstoff, $C_1$-$C_5$-Alkyl, $C_3$-$C_4$-Alkenyl, $C_3$-$C_4$-Alkinyl oder $C_2$-$C_4$-Alkoxyalkyl,

$R^2$ und $R^3$ unabhängig voneinander $C_1$-$C_4$-Alkyl, oder $R^2$ und $R^3$ zusammen mit dem sie tragenden Kohlenstoffatom einen Cycloalkylring mit 3 bis 7 Kohlenstoffatomen,

$R^4$ und $R^5$ unabhängig voneinander Wasserstoff oder $C_1$-$C_4$-Alkyl,

$R^6$ und $R^7$ unabhängig voneinander Wasserstoff, $C_1$-$C_4$-Alkyl, $C_1$-$C_4$-Alkoxy, Nitro, $C_1$-$C_4$-Halogenalkyl, $C_1$-$C_4$-Halogenalkoxy oder Halogen, und

n die Zahl null oder eins bedeuten,

oder einem Salz davon oder einer stereochemisch isomeren Form davon.

Ueberraschenderweise besitzen die Wirkstoffe der Formel I starke pflanzenwuchsregulierende Eigenschaften, welche es erlauben, gezielt in den Metabolismus der behandelten Pflanzen einzugreifen ohne für die Pflanze irreversible toxische Wirkungen hervorzurufen.

In der Definition der Formel I ist unter Alkyl geradkettiges oder verzweigtes Alkyl zu verstehen; z.B. Methyl, Aethyl, n-Propyl, i-Propyl oder die vier isomeren Butyl sowie Pentyl, Neopentyl, Isopentyl, 2-Pentyl oder 3-Pentyl. Bevorzugt sind Methyl und Aethyl. Unter Alkoxy ist zu verstehen: Methoxy, Aethoxy, Propyloxy oder die vier isomeren Butyloxy, insbesondere aber methoxy, Aethoxy oder Isopropyloxy. Halogen bedeutet in den obigen Definitionen Fluor, Chlor, Brom oder Jod, worunter Fluor und Chlor bevorzugt sind. Alkenyl bedeutet beispielsweise Allyl, 3-Butenyl, 2-Butenyl oder Methallyl, wobei Allyl und Methallyl bevorzugt sind. Beispiele für Alkinyl sind Propargyl, 2-Butinyl oder 3-Butinyl, vorzugsweise aber Propargyl. Cycloalkyl bedeutet im allgemeinen Cyclopropyl, Cyclobutyl, Cyclopentyl, Cyclohexyl oder Cycloheptyl, vorzugsweise Cyclopentyl oder Cyclohexyl. Zusammengesetzte Definitionen wie Alkoxyalkyl, Halogenalkyl oder Halogenalkoxy ergeben sich sinngemäss aus den zugrundeliegenden Begriffen. So steht Alkoxyalkyl vorzugsweise für Methoxymethyl, Aethoxymethyl, Propoxymethyl, Methoxyäthyl, Aethoxyäthyl oder Methoxypropyl, insbesondere aber Methoxyäthyl.

Halogenalkyl steht beispielsweise für Difluormethyl, Triflourmethyl, Chlormethyl, 2,2,2-Trifluoraethyl, 1,1,2,2-Tetrafluoräthyl, 1,2,2-Trichloräthyl, 2-Chloräthyl, 2-Bromäthyl, vorzugsweise aber für Trifluormethyl, Halogenalkoxy bedeutet zum Beispiel Difluormethoxy, Trifluormethoxy, 2-Chloräthoxy, 2,2,2-Trifluoräthoxy, 2,2,2-Trichloräthoxy, 1,1,2,2-Tetrafluoräthoxy, 1,1,2,3,3,3-Hexafluorpropoxy, 2-Fluoräthoxy, Fluormethoxy, Chlormethoxy oder 1,2,2-Trichloräthoxy, vorzugsweise aber Difluormethoxy.

$R^2$ und $R^3$ können zusammen mit dem Kohlenstoffatom, an das sie gebunden sind einen spirocyclischen Ring bilden. Typische Vertreter solcher spirocyclischen Ringe sind Cyclopropan-, Cyclobutan-, Cyclopentan-, Cyclohexan- und Cycloheptan-Ringe.

Die Erfindung umfasst ebenfalls die Verwendung der Salze, die die Verbindungen der Formel I mit organischen oder anorganischen Basen wie Aminen, Alkalimetallbasen und Erdalkalimetallbasen oder quaternären Ammoniumbasen oder mit organischen oder anorganischen Säuren wie Mineralsäuren, Sulfonsäuren, Carbonsäuren oder phosphorhaltigen Säuren bilden können.

Beispiele salzbildender Mineralsäuren sind Fluorwasserstoffsäure, Chlorwasserstoffsäure, Bromwasserstoffsäure, Jodwasserstoffsäure, Schwefelsäure, Salpetersäure, Chlorsäure, Perchlorsäure oder Phosphorsäure. Bevorzugte salzbildende Sulfonsäuren sind Toluolsulfonsäure, Benzosulfonsäure, Methansulfonsäure oder Trifluormethansulfonsäure. Als salzbildende Carbonsäuren seien vorzugsweise Essigsäure, Trifluoressigsäure, Benzoesäure, Chloressigsäure, Phthalsäure, Maleinsäure, Malonsäure und Zitronensäure genannt. Phophorhaltige Säuren sind die verschiedenen Phosphonsäuren, phosphonigen Säuren und Phosphinsäuren.

Bevorzugte salzbildende Alkalimetallhydroxide und Erdalkalimetallhydroxide sind Hydroxide von Lithium, Natrium, Kalium, Magnesium oder Calcium, insbesondere aber die von Natrium oder Kalium. Beispiele von geeigneten salzbildenden Aminen sind primäre, sekundäre und tertiäre aliphatische und aromatische Amine wie Methylamin, Aethylamin, Propylamin, Isopropylamin, die vier Butylaminisomeren, Dimethylamin, Diäthylamin, Diäthanolamin, Dipropylamin, Diisopropylamin, Di-n-butylamin, Pyrrolidin, Piperidin, Morpholin, Trimethylamin, Triäthylamin, Tripropylamin, Chinuclidin, Pyridin, Chinolin und Isochinolin. Bevorzugte Amine sind Aethylamin, Propylamin, diäthylamin oder Triäthylamin, insbesondere aber Isopropylamin, Diäthanolamin und 1,4-Diazabicyclo[2.2.2]octan. Beispiele für quaternäre Ammoniumbasen sind im allgemeinen die Kationen von Halogenammoniumsalzen, beispielsweise das Tetramethylammoniumkation, das Trimethylbenzylammoniumkation, das Tetraäthylammoniumkation, das Trimethyläthylammoniumkation und auch das Ammoniumkation.

Die Erfindung umfasst ebenfalls die erfindungsgemässe Verwendung aller optischen Isomeren der Verbindungen der Formel I. Diese können auftreten, wenn der carbocyclische Rest in der Position 1 des Imidazolrings und/oder die einzelnen Substituenten $R^1$ bis $R^7$ der Verbindungen der Formel I asymmetrische Kohlenstoffatome enthalten. Sofern keine nähere Angabe gemacht wird, umfasst die chemische Bezeichnung von Verbindungen deren Mischungen aller stereochemisch isomeren Formen. Die Mischungen enthalten alle Diastereomeren und Enatiomeren der zugrundeliegenden Molekülstruktur.

Die reinen isomeren Formen dieser optisch aktiven Verbindungen können aus den Mischungen durch übliche Trennungsmethoden erhalten werden. Wird im Einzelfall eine spezifische stereochemische Form gewünscht, so wird diese Verbindung vorzugsweise durch stereoselektive Syntheseverfahren hergestellt. In diesen Verfahren kommen mit Vorteil reine Formen der optisch aktiven Ausgangsmaterialien zur Anwendung.

Beispiele für erfindungsgemäss verwendbare Wirkstoffe der Formel I finden sich in der angeschlossenen Tabelle 1. Sie stellen keine Begrenzung der Erfindung dar.

Tabelle 1:

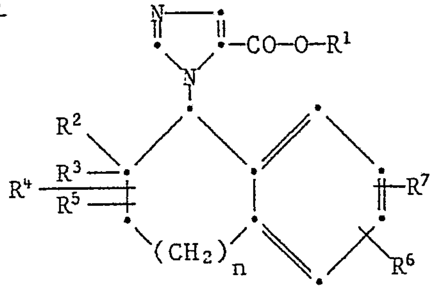

| Verb. No. | $R^1$ | $R^2$ | $R^3$ | $R^4$ | $R^5$ | $R^6$ | $R^7$ | n | Phys. Daten [°C] |
|---|---|---|---|---|---|---|---|---|---|
| 1.001 | $CH_3$ | $CH_3$ | $CH_3$ | H | H | H | H | 1 | 160 (Zers.) $\cdot HNO_3$ |
| 1.002 | $CH_3$ | $CH_3$ | $CH_3$ | H | H | H | H | 1 | 101-102 |
| 1.003 | H | $CH_3$ | $CH_3$ | H | H | H | H | 1 | 238 (Zers.) |
| 1.004 | $CH_3$ | $CH_3$ | $CH_3$ | H | H | 7-$OCH_3$ | H | 1 | 163 (Zers.) $\cdot HNO_3$ |
| 1.005 | $CH_3$ | $CH_3$ | $CH_3$ | H | H | 7-$OCH_3$ | H | 1 | Harz |
| 1.006 | $CH_3$ | $CH_3$ | $CH_3$ | H | H | 5-$CH_3$ | 7-$CH_3$ | 1 | 163 (Zers.) $\cdot HNO_3$ |
| 1.007 | $CH_3$ | $CH_3$ | $CH_3$ | H | H | 5-$CH_3$ | 7-$CH_3$ | 1 | 133-134 |
| 1.008 | $CH_2CH_3$ | $CH_3$ | $CH_3$ | H | H | H | H | 1 | 74-75 |
| 1.009 | $C_4H_9$-n | $CH_3$ | $CH_3$ | H | H | H | H | 1 | 64-66 |
| 1.010 | $C_5H_{11}$-n | $CH_3$ | $CH_3$ | H | H | H | H | 1 | 72-74 |
| 1.011 | $C_3H_7$-i- | $CH_3$ | $CH_3$ | H | H | H | H | 1 | Harz |
| 1.012 | $CH_3$ | $-(CH_2)_5-$ | | H | H | H | H | 1 | $\cdot HNO_3$ |
| 1.013 | $CH_3$ | $-(CH_2)_5-$ | | H | H | H | H | 1 | |
| 1.014 | $CH_3$ | $CH_3$ | $CH_3$ | H | H | H | H | 0 | 172-173 $\cdot HNO_3$ |
| 1.015 | $CH_3$ | $CH_3$ | $CH_3$ | H | H | H | H | 0 | 96,5-97,5 |
| 1.016 | $CH_3$ | $C_2H_5$ | $C_2H_5$ | H | H | H | H | 0 | |
| 1.017 | $CH_3$ | $-(CH_2)_4-$ | | H | H | H | H | 0 | |
| 1.018 | $C_4H_9$-n | $CH_3$ | $CH_3$ | H | H | H | H | 0 | |
| 1.019 | $CH_3$ | $-(CH_2)_4-$ | | H | H | H | H | 1 | 158-160 |
| 1.020 | $CH_3$ | $C_2H_5$ | $C_2H_5$ | H | H | H | H | 1 | 109-110 |
| 1.021 | $CH_3$ | $C_2H_5$ | $C_2H_5$ | H | H | H | H | 1 | 150-1(Zers.) $\cdot HNO_3$ |
| 1.022 | $CH_3$ | $CH_3$ | $CH_3$ | 3-$CH_3$ | H | H | H | 0 | fest, cis $\cdot HNO_3$ |

| Verb. No. | $R^1$ | $R^2$ | $R^3$ | $R^4$ | $R^5$ | $R^6$ | $R^7$ | n | Phys. Daten [°C] |
|---|---|---|---|---|---|---|---|---|---|
| 1.023 | $CH_3$ | $-(CH_2)_4-$ | | H | H | H | H | 1 | 153-154 |
| 1.024 | $CH_3$ | $CH_3$ | $CH_3$ | H | H | H | H | 1 | 141-151 $\cdot CH_3SO_3H$ |
| 1.025 | $CH_3$ | $CH_3$ | $CH_3$ | H | H | H | H | 1 | 146 (Zers.) •HBr |
| 1.026 | $CH_3$ | $CH_3$ | $CH_3$ | H | H | H | H | 1 | 158 (Zers.) •HCl |
| 1.027 | $CH_3$ | $CH_3$ | $CH_3$ | H | H | H | H | 1 | Oel $\cdot H_2SO_4$ |
| 1.028 | $CH_3$ | $CH_3$ | $CH_3$ | H | H | H | H | 1 | Oel $\cdot H_3PO_4$ |
| 1.029 | H | $CH_3$ | $CH_3$ | H | H | H | H | 1 | Harz •Na-Salz |
| 1.030 | H | $CH_3$ | $CH_3$ | H | H | H | H | 1 | fest K-Salz |
| 1.031 | H | $CH_3$ | $CH_3$ | H | H | H | H | 0 | 208-209 |
| 1.032 | $C_2H_5$ | $CH_3$ | $CH_3$ | H | H | H | H | 0 | 124-125 |
| 1.033 | $C_3H_7$-i | $CH_3$ | $CH_3$ | H | H | H | H | 0 | 140-141 |
| 1.034 | $C_3H_7$-n | $CH_3$ | $CH_3$ | H | H | H | H | 0 | 90-91.5 |
| 1.035 | $CH_3$ | $CH_3$ | $CH_3$ | H | H | H | H | 0 | 152-154 •HCl |
| 1.036 | $CH_3$ | $CH_3$ | $CH_3$ | H | H | H | H | 0 | Harz •HBr |
| 1.037 | $CH_3$ | $CH_3$ | $CH_3$ | H | H | H | H | 0 | 193-195 $\cdot CH_3SO_3H$ |
| 1.039 | $CH_3$ | $CH_3$ | $CH_3$ | H | H | H | H | 0 | 95-100 $\cdot H_2SO_4$ |
| 1.040 | $CH_3$ | $CH_3$ | $CH_3$ | H | H | H | H | 0 | 136-138 $\cdot H_3PO_4$ |
| 1.041 | $CH_3$ | $CH_3$ | $CH_3$ | H | H | H | H | 0 | 73-75 $\alpha^D$=-72,9° |
| 1.042 | H | $CH_3$ | $CH_3$ | H | H | H | H | 0 | fest Na-Salz |
| 1.043 | H | $CH_3$ | $CH_3$ | H | H | H | H | 0 | fest K-Salz |
| 1.044 | $CH_3$ | $CH_3$ | $C_2H_5$ | H | H | H | H | 0 | |

| Verb. No. | $R^1$ | $R^2$ | $R^3$ | $R^4$ | $R^5$ | $R^6$ | $R^7$ | n | Phys. Daten [°C] |
|---|---|---|---|---|---|---|---|---|---|
| 1.045 | $CH_3$ | $CH_3$ | $C_2H_5$ | H | H | H | H | 0 | cis |
| 1.046 | $CH_3$ | $CH_3$ | $C_2H_5$ | H | H | H | H | 0 | trans |
| 1.047 | $CH_3$ | $CH_3$ | $C_3H_7$-n | H | H | H | H | 0 | |
| 1.048 | $CH_3$ | $CH_3$ | $CH_3$ | 3-$CH_3$ | 3-$CH_3$ | H | H | 0 | |
| 1.049 | $CH_3$ | $CH_3$ | $CH_3$ | H | H | 7-Cl | H | 0 | |
| 1.050 | $CH_3$ | $CH_3$ | $CH_3$ | H | H | 7-$CH_3$ | H | 0 | |
| 1.051 | $CH_3$ | $CH_3$ | $CH_3$ | H | H | 7-F | H | 0 | |
| 1.052 | $CH_3$ | $CH_3$ | $CH_3$ | H | H | 8-$CH_3$ | H | 0 | |
| 1.053 | $CH_3$ | $CH_3$ | $CH_3$ | H | H | 5-Cl | 7-Cl | 0 | |
| 1.054 | $CH_3$ | $CH_3$ | $CH_3$ | H | H | 5-$CH_3$ | 7-$CH_3$ | 0 | |
| 1.055 | $CH_3$ | $CH_3$ | $CH_3$ | H | H | H | 7-$OCH_3$ | 0 | |
| 1.056 | $CH_3$ | $CH_3$ | $CH_3$ | H | H | H | 7-$CF_3$ | 0 | |
| 1.057 | $CH_3$ | $CH_3$ | $CH_3$ | H | H | 6-Cl | 7-Cl | 0 | |
| 1.058 | $CH_3$ | $CH_3$ | $CH_3$ | 4-$CH_3$ | H | H | H | 1 | |
| 1.059 | $CH_3$ | $CH_3$ | $CH_3$ | H | H | H | 7-Cl | 1 | |
| 1.060 | $CH_3$ | $CH_3$ | $CH_3$ | H | H | H | 7-F | 1 | |
| 1.061 | $CH_3$ | $CH_3$ | $CH_3$ | H | H | H | 7-$CH_3$ | 1 | |
| 1.062 | $CH_3$ | $CH_3$ | $CH_3$ | H | H | 5-Cl | 7-Cl | 1 | |
| 1.063 | $CH_3$ | $CH_3$ | $CH_3$ | H | H | 5-$CH_3$ | 7-$CH_3$ | 1 | |
| 1.064 | $CH_3$ | $CH_3$ | $CH_3$ | H | H | H | 7-$OCH_3$ | 1 | |
| 1.065 | $CH_3$ | $CH_3$ | $C_2H_5$ | H | H | H | H | 1 | |
| 1.066 | $CH_3$ | $CH_3$ | $C_3H_7$-n | H | H | H | H | 1 | |

Es wurde nun überraschend gefunden, dass die Wirkstoffe der Formel I sich vor allem dadurch auszeichnen, dass sie gezielt in den Metabolismus der Pflanzen eingreifen. Dieser gezielte Eingriff in die physiologischen Vorgänge der Pflanzenentwicklung macht das erfindungsgemässe Mittel für verschiedene pflanzenwachstumsregulatorische Zwecke verwendbar, insbesondere für solche, die mit der Ertragssteigerung bei Nutzpflanzen, der Ernteerleichterung und der Arbeitseinsparung bei Massnahmen an Pflanzenkulturen im Zusammenhang stehen.

Für die Wirkungsweise von Pflanzenwachstumsregulatoren gilt nach der bisherigen Erfahrung, das ein Wirkstoff eine oder auch mehrere verschiedenartige Wirkungen auf Pflanzen ausüben kann. Die Wirkungen der Stoffe hängen im wesentlichen ab von dem Zeitpunkt der Anwendung, bezogen auf das Entwicklungsstadium des Samens oder der Pflanze sowie von den auf die Pflanzen oder ihre Umgebung ausgebrachten Wirkstoffmengen und von der Art der Applikation. In jedem Fall sollen Wächstumsregulatoren die Kulturpflanzen in gewünschter Weise positiv beeinflussen.

Pflanzenwuchsregulierende Stoffe können zum Beispiel zur Hemmung des vegetativen Pflanzenwachstums eingesetzt werden. Eine derartige Wuchshemmung ist unter anderem bei Gräsern von wirtschaftlichem Interesse, denn dadurch kann z.B. die Häufigkeit der Grasschnitte in Ziergärten, Flugplätzen, Park- und Sportanlagen oder an Strassenrändern reduziert werden. Von Bedeutung ist auch die Hemmung des Wuchses von krautigen und holzigen Pflanzen an Strassenrändern und in der Nähe von Ueberlandleitungen oder ganz allgemein in Bereichen, in denen ein starker Bewuchs unerwünscht ist.

Wichtig ist auch die Anwendung von Wachstumsregulatoren zur Hemmung des Längenwachstums bei

Getreide, denn durch eine Halmverkürzung wird die Gefahr des Umknickens ("Lagerns") der Pflanzen vor der Ernte verringert oder vollkommen beseitigt. Ausserdem können Wachstumsregulatoren bei Getreide eine Halmverstärkung hervorrufen, die ebenfalls dem Lagern entgegenwirkt.

Eine Hemmung des vegetativen Wachstums erlaubt bei vielen Kulturpflanzen eine dichtere Anpflanzung der Kultur, so dass ein Mehrertrag, bezogen auf die Bodenfläche, erzielt werden kann.

Ein weiterer Mechanismus der Ertragssteigerung mit Wachstumshemmern beruht darauf, dass die Nährstoffe in stärkerem Masse der Blüten- und Fruchtbildung zugute kommen, während das vegetative Wachstum eingeschränkt wird.

Mit Wachstumsregulatoren lässt sich häufig auch eine Förderung, des vegetativen Wachstums erzielen. Dies ist von grossem Nutzen, wenn die vegetativen Pflanzenteile geerntet werden. Eine Förderung des vegetativen Wachstums kann aber auch gleichzeitig zu einer Förderung des generativen Wachstums führen, so dass z.B. mehr oder grössere Früchte zur Ausbildung kommen.

Ertragssteigerungen können in manchen Fällen auch durch einen Eingriff in den pflanzlichen Stoffwechsel erreicht werden, ohne dass sich Aenderungen des vegetativen Wachstums bemerkbar machen. Wachstumsregulatoren können ferner eine Veränderung der Zusammensetzung der Pflanzen bewirken, so dass eine bessere Qualität der Ernteprodukte herbeigeführt wird. So ist es beispielswiese möglich, den Gehalt an Zucker in Zuckerrüben, Zuckerrohr, Ananas sowie Zitrusfrüchten zu erhöhen oder den Proteingehalt in Soja oder Getreide zu steigern.

Unter dem Einfluss von Wachstumsregulatoren kann es zur Ausbildung parthenokarper Früchte kommen. Ferner kann das gaschlecht der Blüten beeinflusst werden.

Mit Wachstumsregulatoren lässt sich auch die Produktion oder der Abfluss von sekundären Pflanzenstoffen positiv beeinflussen. Als Beispiel sei die Stimulierung des Latexflusses bei Gummibäumen genannt.

Während des Wachstums der Pflanze kann durch Einsatz von Wachstumsregulatoren auch die seitliche Verzweigung durch eine chemische Brechung der Apikaldominanz vermehrt werden. Daran besteht z.B. Interesse bei der Stecklingsvermehrung von Pflanzen. Es ist jedoch auch möglich, das Wachstum der Seitentriebe zu hemmen, z.B. um bei Tabakpflanzen nach der Dekapitierung die Ausbildung von Seitentrieben zu verhindern und damit das Blattwachstum zu fördern.

Unter dem Einfluss von Wachstumsregulatoren kann der Blattbestand von Pflanzen so gesteuert werden, dass ein Entblättern der Pflanzen zu einem gewünschten Zeitpunkt erreicht wird. Eine derartige Entlaubung ist von Interesse, um eine mechanische Beerntung z.B. bei Wein oder Baumwolle, zu erleichtern oder um die Transpiration zu einem Zeitpunkt herabzusetzen, an den die Pflanze verpflanzt werden soll. Durch Einsatz von Wachstumsregulatoren lässt sich der vorzeitige Fruchtfall verhindern. Es ist jedoch auch möglich, den Fruchtfall, - zum Beispiel bei Obst -, im Sinne einer chemischen Ausdünnung bis zu einem bestimmten Ausmass zu fördern. Wachstumsregulatoren können auch dazu dienen, um bei Kulturpflanzen zum Zeitpunkt der Ernte die zum Ablösen der Früchte erforderliche Kraft zu vermindern, so dass eine mechanische Beerntung der Pflanzen ermöglicht, beziehungsweise eine manuelle Beerntung erleichtert wird.

Mit Wachstumsregulatoren lässt sich ferner eine Beschleunigung oder auch eine Verzögerung der Reife des Erntegutes vor oder nach der Ernte erreichen. Dieses ist von besonderem Vorteil, weil sich dadurch eine optimale Anpassung an die Bedürfnisse des Marktes herbeiführen lässt. Weiterhin können Wachstumsregulatoren in manchen Fällen die Furchtausfärbung verbessern. Darüberhinaus kann mit Hilfe von Wachstumsregulatoren auch eine zeitliche Konzentrierung der Reife erzielt werden. Damit werden Voraussetzungen dafür geschaffen, dass z.B. Tabak, Tomaten oder Kaffee, eine vollständige mechanische oder manuelle Berntung in nur einem Arbeitsgang vorgenommen werden kann.

Durch die Anwendung von Wachstumsregulatoren kann auch die Samen- oder Knospenruhe der Pflanzen, also die endogene Jahresrhythmik, beeinflusst werden, so dass die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen.

Mit Wachstumsregulatoren kann auch erreicht werden, dass der Austrieb von Knospen oder die Keimung von Samen verzögert wird, z.B. um in frostgefährdeten Gebieten eine Schädigung durch Spätfröste zu vermeiden. Andererseits gelingt es, das Wurzelwachstum und/oder die Ausbildung von Sprösslingen zu stimulieren, so dass das Wachstum auf eine kürzere Zeitdauer beschränkt werden kann.

Wachstumsregulatoren können auch eine Halophilie bei den Kulturpflanzen erzeugen. Damit werden die Voraussetzungen dafür geschaffen, dass eine Kultivierung von Pflanzen auf salzhaltigen Böden durchgeführt werden kann.

Mit Wachstumsregulatoren kann auch eine Frost- und Trockenresistenz bei Pflanzen induziert werden.

Unter dem Einfluss von Wachstumsregulatoren kann das Altern (die Seneszenz) von Pflanzen oder Pflanzenteilen gehemmt respektive verzögert werden. Eine solche Wirkung kann von hohem wirtschaftlichem Interesse sein, dadurch, dass bei behandelten Pflanzenteilen oder ganzen Pflanzen wie Obst, Beeren, Gemüse, Salat oder Zierpflanzen deren Lagerfähigkeit nach der Ernte verbessert oder verlängert werden kann. Ebenso kann durch Behandlung von Kulturpflanzen über eine Verlängerung der Phase photosynthetischer Aktivität eine beachtliche Ertragssteigerung erzielt werden.

Ein weiteres wichtiges Anwendungsgebiet für Wuchshemmer ist deren Einsatz zur Hemmung eines übermässigen Wachstums bei tropischen Bodenbedeckungspflanzen, den sogenannten Cover crops. In tropischen und subtropischen Monokulturen, wie z.B. in Palmplantagen, Baumwoll-, Maisfeldern usw. werden neben den eigentlichen Kulturpflanzen oftmals Bodenbedeckungspflanzen, insbesondere Leguminosenarten

angepflanzt, die zur Erhaltung oder Steigerung der Bodenqualität (Verhinderung der Austrocknung, Versorgung mit Stickstoff) und zur Verhinderung von Erosion (Abtragung durch Wind und Wasser) dienen. Durch Applikation der erfindungsgemässen Wirkstoffe kann nunmehr das Wachstum dieser Cover crops kontrolliert und somit die Wuchshöhe dieser Bodenbedeckungspflanzen auf einem niedrigen Niveau gehalten werden, so dass ein gesundes Gedeihen der Kulturpflanzen und die Aufrechterhaltung einer günstigen Bodenbeschaffenheit gewährleistet ist.

Als Kulturpflanzen gelten im Rahmen vorliegender Erfindung alle Pflanzen, die in irgendeiner Form Ertragsstoffe, wie Samen, Wurzeln, Stengel, Knollen, Blätter, Blüten, ferner Inhaltsstoffe, wie Oele, Zucker, Stärke, Eiweiss usw., produzieren und zu diesem Zweck angebaut werden. Zu diesen Pflanzen gehören beispielsweise sämtliche Getreidearten, wie Weizen, Roggen, Gerste und Hafer, daneben vor allem Reis, Kulturhirse, Mais, Baumwolle, Zuckerrüben, Zuckerrohr, Tabak, Soja, Bohnen und Erbsen.

Im erfindungsgemässen Verfahren zur Beeinflussung des Pflanzenwachstums werden vorzugsweise diejenigen Wirkstoffe der Formel I eingesetzt, in denen

a) $R^1$ für $C_1$-$C_4$-Alkyl steht, oder
b) $R^2$ und $R^3$ für Methyl oder Aethyl stehen, oder
c) $R^4$ und $R^5$ für Wasserstoff stehen, oder
d) $R^6$ und $R^7$ unabhängig voneinander für Wasserstoff, Methyl, Methoxy, Fluor oder Chlor stehen.

Aus der Untergruppe a) sind diejenigen Wirkstoffe bevorzugt, worin $R^1$ Methyl oder Aethyl bedeutet; aus der Untergruppe b) diejenigen, worin $R^2$ und $R^3$ Methyl bedeuten; und aus der Untergruppe d) diejenigen, worin $R^6$ und $R^7$ unabhängig voneinander Wasserstoff, Methyl oder Methoxy bedeuten.

Eine besonders bevorzugte Gruppe von Wirkstoffen für das erfindungsgemässe Verfahren zeichnet sich dadurch aus, dass $R^1$ Methyl oder Aethyl, $R^2$ und $R^3$ Methyl, $R^4$ und $R^5$ Wasserstoff und $R^6$ und $R^7$ unabhängig voneinander Wasserstoff, Methyl oder Methoxy bedeuten.

Bevorzugte Einzelwirkstoffe sind:

1-(2,2-Dimethyltetralin-1-yl)-5-imidazol-carbonsäuremethylester,

1-(2,2-Dimethyltetralin-1-yl)-5-imidazol-carbonsäureäthylester

1-(2,2-Dimethylindan-1-yl)-5-imidazol-carbonsäuremethylester,

1-(2,2-Dimethylindan-1-yl)-5-imidazol-carbonsäureäthylester, und

(-)1-(2,2-Dimethylindan-1-yl)-5-imidazol-carbonsäuremethylester

Die Wirkstoffe der Formel I werden in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemittlen, Granulaten, auch Verkapselungen in z.B. polymeren Stoffen in bekannter Weise verarbeitet. Die Anwendungsverfahren wie Versprühen, Verneblen, Verstäuben, Verstreuen oder Giessen werden gleich wie die Art der Mittel den angestrebten Zielen und den gegebenen Verhältnissen entsprechend gewählt.

Die Formulierungen, d.h., die den Wirkstoff der Formeln I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Di-octylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle, wie epoxydiertes Kokossnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffgemisches nichtionogene, kation-und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen wie wasserlösliche synthetische Oberflächenaktive Verbindungen sein.

Als Seifen sind z.B. die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen

Fettsäuregemischen, die z.B. aus Koskosnuss- oder Talgöl gewonnen werden können. Ferner sind auch die Fettsäure-methyltaurin-salze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyd-Addukte. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes oder Phospholipide in Frage.

Als nichtionisches Tensid kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 1000 Propylenglykoläthergruppen enthaltenden Polyäthylenoxidaddukte an Poly propylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxyaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalzue, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi-(2-chloräthyl)-äthylammoniumbromid.

Die in der Formulierungstechnik gebräuchlichen Tenside sind u.a. in folgenden Publikationen beschrieben:

"Mc Cutcheon's Detergents und Emulsifiers Annual" MC Publishing Corp., Ridgewood, New Jersey, 1979
J. and M. Ash, "Encyclopedia of Surfactants" Vol. I-III, Chemical Publishing Co., Inc. New York, 1980-81
H. Stache "Tensid Taschenbuch", 2. Auflage, C. Hanser Verlag, München und Wien 1981.

Die im erfindungsgemässen Verfahren einsetzbaren Zubereitungen enthalten in der Regel 0,1 bis 95 %, insbesondere 0,1 bis 80 %, der erfindungsgemässen Wirkstoffkombination neben 1 bis 99,9 % eines festen oder flüssigen Zusatzstoffes und/oder 0 bis 25 %, insbesondere 0,1 bis 25 % eines Tensides.

Insbesondere setzten sich bevorzugte Formulierungen folgendermassen zusammen: (% = Gewichtsprozent).

Emulgierbare Konzentrate Wirkstoffgemisch: 1 bis 20 %, bevorzugt 5 bis 10 %
oberflächenaktives Mittel: 5 bis 30 %, vorzugsweise 10 bis 20 %
flüssiges Trägermittel: 50 bis 94 %, vorzugsweise 70 bis 85 %

Stäube Wirkstoffgemisch: 0,1 bis 10 %, vorzugsweise 0,1 bis 1 %
festes Trägermittel: 99,9 bis 90 %, vorzugsweise 99,9 bis 99 %.

Suspension-Konzentrate Wirkstoffgemisch: 5 bis 75 %, vorzugsweise 10 bis 50 %
Wasser: 94 bis 25 %, vorzugsweise 90 bis 30 %
oberflächenaktives Mittel: 1 bis 40 %, vorzugsweie 2 bis 30 %.

Benetzbare Pulver Wirkstoffgemisch: 0,5 bis 90 %, vorzugsweise 1 bis 80 %
oberflächenaktives Mittel: 0,5 bis 20 %, vorzugsweise 10 bis 20 %
flüssiges Trägermittel: 5 bis 95 %, vorzugsweise 15 bis 90 %

Granulate Wirkstoffgemisch: 0,5 bis 30 %, vorzugsweise 3 bis 15 %
festes Trägermittel: 99,5 bis 70 %, vorzugsweise 99 bis 85 %.

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,01 bis 10 kg Aktivsubstanz/ha, vorzugsweise 0,025 bis 5 kg Aktivsubstanz/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für erfindungsgemäss verwendbare Zubereitungen

| a) Spritzpulver | a) | b) | c) |
|---|---|---|---|
| Wirkstoff Nr. 1.002 | 20 % | 60 % | 0,5 % |
| Na-Ligninsulfonat | 5 % | 5 % | 5 % |
| Na-Laurylsulfat | 3 % | --- | --- |
| Na-Diisobutylnapthylinsulfonat | --- | 6 % | 5 % |
| Octylphenolpolyäthylenglykoläther (7-8 mol AeO) | --- | 2 % | 2 % |
| Hochdisperse Kieselsäure | 5 % | 27 % | 27 % |
| Kaolin | 67 % | --- | --- |
| Natriumchlorid | --- | --- | 60,5 % |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsion-Konzentrat | a) | b) |
|---|---|---|
| Wirkstoff Nr. 1.032 | 10 % | 1 % |
| Octylphenolpolyäthylenglykoläther (4-5 mol AeO) | 3 % | 3 % |
| Ca-Dodecylbenzolsulfonat | 3 % | 3 % |
| Ricinusölpolyglykoläther (36 mol AeO) | 4 % | 4 % |
| Cyclohexanon | 30 % | 10 % |
| Xylolgemisch | 50 % | 79 % |

EMI ID=19/1 HE=15 WI=135 TI=TAB

Aus diesem Konzentrat können durch Verdünnen mit Wasser Emulsionen jeder gewünschten Konzentration hergestellt werden.

c) Stäubemittel

| | a) | b) |
|---|---|---|
| Wirkstoff Nr. 1.015 | 0,1 % | 1 % |
| Talkum | 99,9 % | --- |
| Kaolin | --- | 99 % |

Man erhält anwendungsfertige Stäubemittel, indem der Wirkstoff mit dem Träger vermischt und auf einer geeigneten Mühle vermahlen wird.

d) Extruder-Granulat

| | a) | b) |
|---|---|---|
| Wirkstoff Nr. 1.008 | 10 % | 1 % |
| Na-Ligninsulfonat | 2 % | 2 % |
| Carboxymethylcellulose | 1 % | 1 % |
| Kaolin | 87 % | 96 % |

Der Wirkstoff wird mit den Zusatzstoffen vermischt, vermahlen und mit Wasser angefeuchtet. Dieses Gemisch wird extrudiert und anschliessend im Luftstrom getrocknet.

e) Umhüllungs-Granulat

| | |
|---|---|
| Wirkstoff Nr. 1.008 | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

f) Suspensions-Konzentrat

| | a) | b) |
|---|---|---|
| Wirkstoff Nr. 1.002 | 40 % | 5 % |
| Aethylenglykol | 10 % | 10 % |

| | | |
|---|---|---|
| Nonylphenolpolyäthylenglykoläther (15 mol AeO) | 6 % | 1 % |
| Na-Ligninsulfonat | 10 % | 5 % |
| Carboxymethylcellulose | 1 % | 1 % |
| 37%ige wässrige Formaldehyd-Lösung | 0,2 % | 0,2 % |
| Silikonöl in Form einer 75%igen wässrigen Emulsion | 0,8 % | 0,8 % |
| Wasser | 32 % | 77 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Biologische Beispiele:

Beispiel 1: Wuchsregulations-Versuch im Gewächshaus

Im Gewächshaus werden in Kunststofftöpfen von 12 cm Durchmesser, welche mit gesiebter sterilisierter Erde gefüllt sind, die Pflanzen Solanum lycopersicum, Sinapis alba, Stellaria media, Phaseolus vulgaris, Avena sativa, Setaria italica und Lolium perenne angesät. Die Pflanzen werden unter den für ein gutes Wachstum erforderlichen Bedingungen von Belichtung, Temperatur, Feuchtigkeit und Wassergaben gehalten. 11-14 Tage nach der Ansaat werden die jungen Pflanzen dann mit der zu prüfenden Substanz gespritzt. Die Applikation erfolgt in einer Dosierung von umgerechnet 4 kg Wirkstoffgemisch und 500 l Wasser pro Hektar. Die Pflanzen werden weiterhin im Gewächshaus gehalten und beobachtet. Der Versuch wird 14 Tage nach der Behandlung ausgewertet, wobei die behandelte Pflanze im Vergleich zur unbehandelten Kontrollpflanze beurteilt wird. Die Länge des Neuzuwachses wird anhand der linearen Notenskala ziwschen
1: Kein Wachstum nach der Applikation und
9: Wachstum wie unbehandelte Kontrolle
klassifiziert. Die beobachteten zusätzlichen wuchsregulierenden Wirkungen auf die Pflanzen werden qualitativ erfasst und mit folgenden Kennbuchstaben charakterisiert:

- A: Abszission
- B: Blattdeformation
- I: intensivere Grünfärbung
- L: leichte Chlorosen
- P: Vegetationspunkt abgestorben
- R: reduzierte Blattfläche
- S: Stengel verdickt
- W: Seitentriebförderung
- X: leichte Nekrosen
- Y: starke Nekrosen

Man erhält folgende Resultate:

| Verb. Nr. | Solanum | Sinapis | Stellaria | Phaseolus | Avena | Setaria | Lolium |
|---|---|---|---|---|---|---|---|
| 1.001 | 1 IY | 1 IBX | 1 IBY | 1 IBX | 2 IX | 3 I | 3 I |
| 1.002 | 2 IB | 2 IBX | 1 IBX | 1 IX | 2 IY | 4 I | 3 I |
| 1.003 | 2 IBX | 2 IBX | 2 IB | 9 | 7 IX | 6 IX | 7 I |
| 1.004 | 7 BX | 3 IBX | 9 B | 6 IB | 7 IX | 9 | 5 |
| 1.005 | 2 BX | 1 IBX | 3 IBX | 1 IRX | 5 IX | 4 IX | 4 IX |
| 1.006 | 8 BX | 4 B | 7 B | 3 BRI | 9 | 9 | 9 |
| 1.007 | 9 | 9 | 9 | 9 IBR | 9 | 9 | 9 |
| 1.008 | 1 BLX | 2 BY | 2 RY | 1 PLY | 7 IX | 3 IX | 4 IX |
| 1.009 | 1 IBY | 1 IBY | 3 RIY | 1 PIX | 9 X | 3 IX | 6 X |
| 1.011 | 2 BY | 1 BY | 2 RIY | 1 PIX | 9 X | 4 Y | 6 X |
| 1.012 | 3 BX | 4 IB | 6 IB | 6 IBX | 9 | 8 I | 5 I |
| 1.013 | 6 LIX | 3 IB | 4 I | 8 W | 8 | 9 L | 9 |
| 1.014 | 3 B | 6 BX | 8 I | 8 BR | 9 | 9 | 9 |
| 1.015 | 2 IB | 2 IBX | 3 RBX | 2 RBX | 4 IX | 3 IX | 3 I |
| 1.016 | 1 IY | 1 IBY | 1 IBY | 1 IBRX | 4 IWX | 4 I | 2 IX |
| 1.017 | 2 IBX | 1 IY | 2 IBX | 1 PBIX | 4 IY | 2 IX | 2 IX |
| 1.024 | 1 IBX | 1 IBX | 3 IBX | 1 PIBX | 3 IX | 3 IX | 3 IX |
| 1.025 | 1 IBX | 1 IBX | 2 IBX | 1 PIBX | 2 IX | 3 IX | 3 IX |
| 1.026 | 2 IBX | 1 IBX | 2 IBX | 1 PBX | 3 IX | 2 I | 2 I |
| 1.029 | 7 B | 2 IB | 3 I | 9 | 9 | 9 | 9 |
| 1.030 | 4 IB | 2 IB | 3 IB | 9 X | 9 I | 7 | 9 |
| 1.031 | 3 IB | 1 IB | 2 IB | 9 B | 4 I | 2 I | 6 I |
| 1.032 | 2 IBX | 1 IBX | 2 IBR | 1 PBIX | 4 IX | 3 IX | 3 IX |
| 1.033 | 2 IBX | 2 IBX | 3 IRB | 1 PIBX | 7 IX | 6 X | 5 IX |
| 1.034 | 2 IBX | 1 IBX | 2 IRB | 1 PIBX | 7 IS | 3 IS | 6 IX |

Beispiel 2: Wuchshemmung bei Gräsern und Klee

In Kunststofftöpfen mit Erde-Torf-Sand Gemisch (6:3:1) werden die Gräser Lolium perenne, Poa pratensis, Festuca ovina, Dactylis glomerata, Festuca rubra, Agropyron repens, Bromus inermis, Cynosurus cristatus, sowie die zwei Kleearten Trifolium pratense und Trifolium repens im Gewächshaus angesät und nach Bedarf bewässert. Die aufgelaufenen Pflanzen werden wöchentlich bis auf 4 cm Höhe zurückgeschnitten und ca. 40 Tage nach der Aussaat und einen Tag nach dem letzten Schnitt mit der wässrigen Spritzbrühe des Wirkstoffes der Formel I besprüht. Die Wirkstoffmenge beträgt umgerechnet 1000 g oder 3000 g Wirkstoff der Formel I pro Hektar, die Spritzbrühemenge 500 Liter pro Hektar. 21 Tage nach Applikation wird das Längenwachstum des Neuzuwachses der Pflanzen in Prozent im Vergleich zu den unbehandelten Kontrollpflanzen getrennt nach Monokotyledonen und Dikotyledonen beurteilt. Zusätzliche pflanzenregulatorische Wirkungen werden mit den im Beispiel 1 definierten Kennbuchstaben erfasst.

Man erhält folgende Ergebnisse:

| Verb. Nr. | Neuzuwachs in Prozent (Rasen) | | | |
|---|---|---|---|---|
| | Monokotyledonen | | Dikotyledonen | |
| | 1000g/ha | 3000g/ha | 1000g/ha | 3000g/ha |
| 1.002 | 75 I | 50 I | 13 | 6 |
| 1.004 | 77 | 77 | 45 | 36 |
| 1.025 | 88 | 63 I | 37 | 29 |
| 1.026 | 80 | 60 I | 22 | 15 |
| 1.014 | 69 I | - | 12 | - |
| 1.015 | 46 I | 23 XI | 0 | 0 |
| 1.037 | 65 I | - | 11 | - |

-: nicht geprüft

Beispiel 3: Wuchshemmung bei Gerste

In Kunststofftöpfen mit sterilisierter Erde werden Samen von Hordeum vulgare (Sommergerste, Sorte "Iban") im Gewächshaus angesät und nach Bedarf bewässert. Die Sprösslinge werden ca. 35 Tage nach der Aussaat mit der wässrigen Spritzbrühe der Wirkstoffe der Formel I besprüht. Die Wirkstoffmenge beträgt umgerechnet 0.5, 1 oder 3 kg Aktivsubstanz pro Hektar, die Spritzbrühenmenge 500 Liter pro Hektar. 50 Tage nach Applikation wird das Wachstum beurteilt. Das Längenwachstum des Neuzuwachses wird in Prozent im Vergleich zur unbehandelten Kontrolle registriert. Zusätzliche Wirkungen werden mit den im Beispiel 1 definierten Kennbuchstaben erfasst.

Man erhält folgende Ergebnisse:

| Verb. Nr. | Neuzuwachs in Prozent (Gerste) | | |
|---|---|---|---|
| | 500g/ha | 1000g/ha | 3000g/ha |
| 1.002 | - | 46 I | 26 XL |
| 1.004 | - | 101 | 42 XIL |
| 1.014 | 24 I | - | - |
| 1.015 | 19 IL | - | - |
| 1.025 | - | 109 | 37 XIL |
| 1.026 | - | 101 | 31 XIL |
| 1.035 | 17 I | - | - |
| 1.037 | 35 | - | - |
| 1.040 | 33 I | - | - |

-: nicht geprüft

Beispiel 4: Wuchshemmung bei Soja

In Kunststofftöpfen mit einem Erde/Torf/Sand-Gemisch (6:3:1) werden Samen von Sojapflanzen (Sorte "Maple Arrow") im Gewächshaus ausgesät und in der Klimakammer angezogen. Bewässerung, Temperatur regelung und Beleuchtung erfolgen nach Bedarf. Im Dreiblattstadium (ca. 20 Tage nach Aussaat) werden die Wirkstoffe der Formel I in Aufwandmenge zwischen 0.06 und 1.5 kg Aktivsubstanz pro Hektar und einer Spritzbrühenmenge von 500 Liter pro Hektar appliziert. 20 Tage nach der Applikation wird der Versuch ausgewertet. Die Länge des Neuzuwachses wird in Prozent im Vergleich zur unbehandelten Kontrolle ermittelt. Zusätzliche Wirkungen werden mit den im Beispiel 1 definierten Kennbuchstaben erfasst.

Man erhält folgende Ergebnisse:

| Verb. Nr. | Neuzuwachs in Prozent (Soja) | | |
|---|---|---|---|
| | 60g/ha | 500g/ha | 1500g/ha |
| 1.002 | - | 17 YBRAP | 13 YBRAP |
| 1.004 | - | 35 YBRA | 11 YBRA |
| 1.009 | - | 45 XBR | 17 XBR |
| 1.011 | - | 40 XBR | 7 YBRL |
| 1.014 | 15 YPAB | - | - |
| 1.015 | 19 YPA | - | - |
| 1.024 | - | 17 YBRAP | 15 YPA |
| 1.025 | - | 28 YBRA | 15 YPA |
| 1.026 | - | 17 YBRAP | 11 YPA |
| 1.035 | 11 YPA | - | - |
| 1.039 | 13 YPA | - | - |

-: nicht geprüft

Beispiel 5: Wuchshemmung bei Bohnen

In Kunststofftöpfen mit einem Erde/Torf/Sand-Gemisch (6:3:1) werden Bohnen (Phaseolus) ausgesät und im Gewächshaus amgezogen und nach Bedarf gewässsert. 11 Tage nach der Saat wird der Haupttrieb oberhalb der einteiligen Primärblätter abgeschnitten. 2 bis 3 Tage später wird der Wirkstoff der Formel I in einer Aufwandmenge zwischen 0.06 und 0.5 kg Aktivsubstanz pro Hektar und einer Spritzbrühenmenge von 500 Liter pro Hektar appliziert. 14 Tage nach der Applikation wird der Versuch ausgewertet. Die Länge des Neuzuwachses wird in Prozent im Vergleich zur unbehandelten Kontrolle ermittelt. Zusätzliche Wirkungen werden mit den im Beispiel 1 definierten Kennbuchstaben erfasst.

Man erhält folgende Ergebnisse:

| Verb. Nr. | Neuzuwachs in Prozent (Bohnen) | | |
|---|---|---|---|
| | 60g/ha | 100g/ha | 500g/ha |
| 1.002 | - | 7 YBL | 0 YPA |
| 1.014 | 18 YBRA | - | - |
| 1.015 | 12 YBRA | - | - |
| 1.024 | - | 56 BR | 0 YPA |
| 1.025 | - | 70 B | 7 YBRL |
| 1.026 | - | 14 YBR | 0 YPA |
| 1.035 | 12 YBRA | - | - |
| 1.036 | 0 YPA | - | - |
| 1.040 | 0 YPA | - | - |

-: nicht geprüft

Beispiel 6: Wuchshemmung bei Cover Crops

Tropische Bodendecker-Leguminosen (cover crops) Centrosema pubescens und Psophocarpus palustris werden in Asbestzementschalen mit Torffüllung aus Stecklingen vermehrt. Diese Stecklinge werden nach dem Anwurzeln im Gewächshaus in Kunststofftöpfe mit einem Erde/Torf-Gemisch (1:3) umgepflanzt und bei Bewässerung nach Bedarf herangezogen. Die Pflanzen werden alle 2 Wochen auf eine Länge von 15 cm gekürzt. 65 Tage nach dem Umsetzen und 3 Tage nach dem letzten Schnitt wird eine wässrige Dispersion des Wirkstoffs Nr. 1.015 in Aufwandmengen zwischen 50 g und 400 g pro Hektar, bei einer Spritz brühenmenge von 500 Liter pro Hektar appliziert. 32 Tage nach der Applikation wird das Gewicht des Neuzuwachses in Prozent im Vergleich zur unbehandelten Kontrolle ermittelt.

Man erhält folgende Ergebnisse:

| Aufwandmenge in gAS/ha | Neuzuwachs in Prozent (cover crops) Centrosema | Psophocarpus |
|---|---|---|
| 50 | 53 | 73 |
| 100 | 46 | 70 |
| 200 | 34 | 31 |
| 400 | 5 | 7 |

Beispiel 7: Vergleichsversuche

Mit den folgenden zwei Verbindungen des Standes der Technik, welchen im US-Patent 3 873 297 seitensprossunterdrückende Wirkungen an Tabakpflanzen zugeschrieben werden, wurden Vergleichsversuche in Tabak, Soja, Bohnen und Getreide durchgeführt:

Verbindung A:

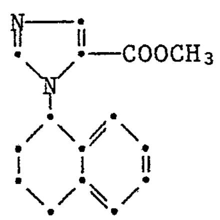

Verbindung B:

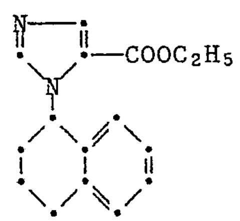

a) Geiztriebhemmung in Tabak

Samen von Tabak (Nicotiana, Sorte "Cocker") werden in Saatschalen mit Torf angesät, nach dem Auflaufen in Kunststofftöpfe umgepflanzt und im Gewächshaus angezogen. Die Bewässerung erfolgt nach Bedarf. 75 Tage nach der Aussaat werden die Pflanzen so geköpft, dass 6 bis 8 Blattpaare stehen bleiben. Einen Tag später werden die Prüfwirkstoffe A, B, 1.002, 1.008, 1.015 und 1.032 in Aufwandmengen von 50 g bis 100 g Aktivsubstanz pro Hektar in einer Spritzbrühenmenge von 15 ml pro Pflanze so appliziert, dass die Spritzbrühe am Stengel herabfliesst und die Geiztriebknospen in den Blattachseln benetzt. 20 Tage nach der Applikation wird das Gewicht der Geiztriebe in Prozent der bei der unbehandelten Kontrollpflanze entwickelten

Seitentriebe ermittelt.

Ergebnisse:

| Verb. Nr. | Geiztriebgewicht in Prozent (Tabak) 50g/ha | 100g/ha |
|---|---|---|
| A | 61 | 41 |
| B | 81 | 55 |
| 1.002 | 21 | 1 |
| 1.008 | 42 | 22 |
| 1.015 | 1 | 1 |
| 1.032 | 22 | 4 |

b) Wuchshemmung Soja

In der Versuchsanordnung von Beispiel 4 werden die Wirkstoffe A, B, 1.002, 1.009, 1.015 und 1.032 in Aufwandmengen zwischen 100 g und 450 g Aktivsubstanz pro Hektar verglichen.

Ergebnisse:

| Verb. Nr. | Neuzuwachs in Prozent (Soja) 100g/ha | 150g/ha | 450g/ha |
|---|---|---|---|
| A | 67 XBLW | 69 XBRL | 21 XBLIW |
| B | 72 XBLR | 92 XBRL | 64 XBRIA |
| 1.002 | 14 YBRA | 11 YPA | 8 YPA |
| 1.008 | 50 XBRL | 42 YBRA | 11 YBRA |
| 1.015 | 14 YBRLA | 13 YBLA | 8 YPA |
| 1.032 | 35 YBRLA | 19 YBRA | 8 YPA |

c) Wuchshemmung Bohnen

In der Versuchsanordnung von Beispiel 5 werden die Wirkstoffe A, B, 1.002, 1.015 und 1.032 in Aufwandmengen zwischen 50 g und450 g Aktivsubstanz pro Hektar verglichen.

Ergebnisse

| Verb. Nr. | Neuzuwachs in Prozent (Bohnen) 50g/ha | 150g/ha | 450g/ha |
|---|---|---|---|
| A | 66 BRL | 28 XBRLA | 11 YBRAP |
| B | 88 BR | 94 BR | 77 IBR |
| 1.002 | 33 XBRWA | 11 YBAP | 6 YPA |
| 1.015 | 11 YPA | 17 YBAP | 6 YPA |
| 1.032 | 55 BRW | 28 XBRLA | 11 YPA |

d) Wuchshemmung Getreide

In Kunststofftöpfen mit sterilisierter Erde werden Samen von Sommergerste (Hordeum vulgare, Sorte "Iban") und Sommerweizen (Triticum, Sorte "Walter") im Gewächshaus angesät und nach Bedarf gewässert. 35 Tage nach der Aussaat am Ende der Bestockungsphase werden die Wirkstoffe A, B, 1.002, 1.015 und 1.032 in Aufwandmengen von 1 kg Aktivsubstanz pro Hektar in Spritzbrühenmenge von 500 Liter pro Hektar appliziert. 50 Tage nach der Applikation wird die Länge des Neuzuwachses in Prozent im Vergleich zur unbehandelten Kontrolle ermittelt.

Ergebnisse:

| Verb. Nr. | Neuzuwachs in Prozent (Getreide) Gerste | Weizen |
|---|---|---|
| A | 34 XI | 67 I |
| B | 92 I | 105 |
| 1.002 | 2 XIL | 47 XI |
| 1.015 | 14 XIL | 22 XI |
| 1.032 | 36 IS | 49 XI |

**Patentansprüche**

1. Verfahren zur Beeinflussung des Pflanzenwachstums, dadurch gekennzeichnet, dass man auf die Pflanze, auf Teile der Pflanze oder auf den Lebensraum der Pflanze, eine wirksame Menge eines Wirkstoffs der Formel I

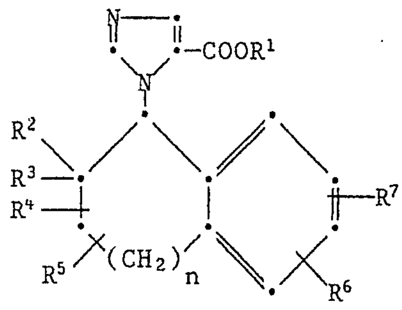

worin
$R^1$ Wasserstoff, $C_1$-$C_5$-Alkyl, $C_3$-$C_4$-Alkenyl, $C_3$-$C_4$-Alkinyl oder $C_2$-$C_4$-Alkoxyalkyl,
$R^2$ und $R^3$ unabhängig voneinander $C_1$-$C_4$-Alkyl, oder $R^2$ und $R^3$ zusammen mit dem sie tragenden Kohlenstoffatom eine Cycloalkylring mit 3 bis 7 Kohlenstoffatomen,
$R^4$ und $R^5$ unabhängig voneinander Wasserstoff oder $C_1$-$C_4$-Alkyl,
$R^6$ und $R^7$ unabhängig voneinander Wasserstoff, $C_1$-$C_4$-Alkyl, $C_1$-$C_4$-Alkoxy, Nitro, $C_1$-$C_4$-Halogenalkyl, $C_1$-$C_4$-Halogenalkoxy oder Halogen, und
n die Zahl null oder eines
bedeuten, oder ein Salz davon oder eine stereochemisch isomere Form davon, appliziert.

2. Verfahren gemäss Anspruch 1, dadurch gekennzeichnet, dass $R^1$ für $C_1$-$C_4$-Alkyl steht.

3. Verfahren gemäss Anspruch 1, dadurch gekennzeichnet, dass $R^2$ und $R^3$ für Methyl oder Aethyl stehen.

4. Verfahren gemäss Anspruch 1, dadurch gekennzeichnet, dass $R^4$ und $R^5$ für Wasserstoff stehen.

5. Verfahren gemäss Anspruch 1, dadruch gekennzeichnet, dass $R^6$ und $R^7$ unabhängig voneinander Wasserstoff, Methyl, Methoxy, Fluor oder Chlor bedeuten.

6. Verfahren gemäss Anspruch 2, dadurch gekennzeichnet, dass $R^1$ Methyl oder Aethyl bedeutet.

7. Verfahren gemäss Anspruch 3, dadurch gekennzeichnet, dass $R^2$ und $R^3$ Methyl bedeuten.

8. Verfahren gemäss Anspruch 5, dadurch gekennzeichnet, dass $R^6$ und $R^7$ unabhängig voneinander Wasserstoff, Methyl oder Methoxy bedeuten.

9. Verfahren gemäss Anspruch 1, dadurch gekennzeichnet, dass $R^1$ Methyl oder Aethyl, $R^2$ und $R^3$ Methyl, $R^4$ und $R^5$ Wasserstoff und $R^6$ und $R^7$ unabhängig voneinander Wasserstoff, Methyl oder Methoxy bedeuten.

10. Verfahren gemäss Anspruch 1, dadurch gekennzeichnet, dass man als Wirkstoff 1-(2,2-Dimethyltetralin-1-yl)-5-imidazol-carbonsäuremethylester verwendet.

11. Verfahren gemäss Anspruch 1, dadurch gekennzeichnet, dass man als Wirkstoff 1-(2,2-Dimethyltetralin-1-yl)-5-imidazol-carbonsäureäthylester verwendet.

12. Verfahren gemäss Anspruch 1, dadurch gekennzeichnet, dass man als Wirkstoff 1-(2,2-Dimethylindan-1-yl)-5-imidazol-carbonsäuremethylester verwendet.

13. Verfahren gemäss Anspruch 1, dadurch gekennzeichnet, dass man als Wirkstoff 1-(2,2-Dimethylindan-1-yl)-5-imidazol-carbonsäureäthlylester verwendet.

14. Verfahren gemäss Anspruch 1, dadurch gekennzeichnet, dass man als Wirkstoff (-)1-(2,2-Dimethylindan-1-yl)-5-imidazol-carbonsäuremethylester verwendet.

15. Verfahren gemäss Anspruch 1, dadurch gekennzeichnet, dass die Wirkstoffe der Formel I in Aufwandmengen zwischen 0,025 und 5 kg Aktivsubstanz pro Hektar appliziert werden.

16. Verfahren gemäss Anspruch 1 zur Wuchshemmung an Monokotyledonen.

17. Verfahren gemäss Anspruch 1 zur Wuchshemmung an Dikotyledonen.

18. Verfahren gemäss Anspruch 16 zur Wuchshemmung an Getreide.

19. Verfahren gemäss Anspruch 18, dadurch gekennzeichnet, dass man Gerste oder Weisen behandelt.

20. Verfahren gemäss Anspruch 16 zur Wuchshemmung an Gräsern.

21. Verfahren gemäss Anspruch 17 zur Wuchshemmung an Leguminosen.

22. Verfahren gemäss Anspruch 21, dadurch gekennzeichnet, dass man Klee, Soja, Bohnen oder cover crops der Gattungen Centrosema oder Psophocarpus behandelt.